(19) Europäisches Patentamt / European Patent Office / Office européen des brevets

(11) **EP 2 039 023 B1**

(12) **EUROPEAN PATENT SPECIFICATION**

(45) Date of publication and mention
of the grant of the patent:
**21.04.2010 Bulletin 2010/16**

(21) Application number: **07761318.0**

(22) Date of filing: **26.04.2007**

(51) Int Cl.:
**H04B 7/155** (2006.01)

(86) International application number:
**PCT/US2007/067460**

(87) International publication number:
**WO 2008/002717 (03.01.2008 Gazette 2008/01)**

(54) **RELAYING IN WIRELESS COMMUNICATION SYSTEMS**

WEITERSCHALTUNG IN DRAHTLOSEN KOMMUNIKATIONSSYSTEMEN

RETRANSMISSION DANS DES SYSTÈMES DE COMMUNICATION SANS FIL

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.06.2006 GB 0612875**

(43) Date of publication of application:
**25.03.2009 Bulletin 2009/13**

(73) Proprietor: **Motorola, Inc.**
**Schaumburg, IL 60196 (US)**

(72) Inventor: **SIMOENS, Sebastien,**
**F-92330 Sceaux (FR)**

(74) Representative: **McLeish, Nicholas Alistair Maxwell**
**Boult Wade Tennant**
**Verulam Gardens**
**70 Gray's Inn Road**
**London WC1X 8BT (GB)**

(56) References cited:
**WO-A-01/11797     US-A1- 2005 254 442**

## Description

### Field of the invention

The invention relates to a relaying in wireless communication systems and in particular, but not exclusively, to relaying in wireless cellular communication systems and/or Wireless Local Area Networks (WLANs).

### Background of the Invention

In modern wireless telecommunication systems it has been proposed to improve reception quality by combining signals received directly from a source with signals received from a relay unit.

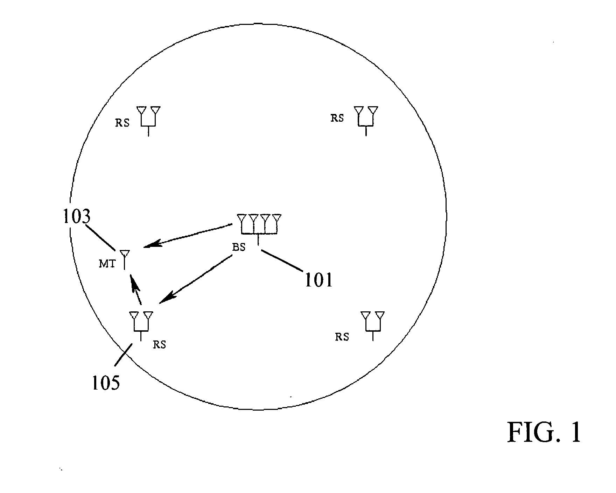

FIG. 1 illustrates a scenario for a cellular communication system wherein communication quality is enhanced by use of a relay station. The cellular communication system may for example be a Wireless Local Area Network (WLAN). In the example, a Base Station (BS) 101 transmits a signal which is received at a Mobile Terminal (MT) 103. In addition, the signal is received by a Relay Station (RS) 105 which relays the signal to the MT 103. The MT 103 can then combine the signals from the BS 101 and the RS 105 thereby improving the reception.

In order for such a relay system to operate efficiently, it is important that an efficient approach is used for the relay communication.

In current commercial wireless meshed networks, a relay technique is used which is known as the Decode & Forward (D&F) technique. In the example of where the system of FIG. 1 uses the D&F technique, the BS 101 transmits a data packet to the MT 103 which is also received by the RS 105. The RS 105 then attempts to decode the data packet and if it is successful, the RS 105 then re-encodes the packet and forwards it to the MT.

This approach may result in reliable and improved performance in many circumstances. Specifically, if the MT 103 is within the range of both the BS 101 and the RS 105, the capacity can be improved by combining the transmissions from the BS 101 and RS 105.

An example of a D&F system is disclosed in G. Kramer, M. Gastpar, P. Gupta "Cooperative Strategies and Capacity Theorems for Relay Networks" IEEE Transactions on Information Theory. Vol 51. No 9. Sep 2005 which also demonstrates that such cooperative D&F works well and can result in significant capacity improvement when the BS-RS link is good (i.e. its capacity is much higher than that of the BS-MT and RS-MT links). This is typically the case if the RS is deployed by an operator at selected sites such that they may e.g. benefit from directional antennas and Line Of Sight propagation from the BS.

However, in other situations D&F systems do not result in an optimal performance. For example, the BS 101 may transmit to an MT 103 located where several potential relay devices all receive a weak signal. In such cases, the improvement reduces substantially and as illustrated in the document referred to above, the capacity of the communication reduces substantially even if the RS 105 and the MT 103 are close together.

In order to improve performance in such scenarios, other relay approaches have been proposed. Specifically, an approach known as Amplify & Forward (A&F) has been proposed. In cooperative A&F, the RS 105 does not attempt to decode the received data packet. Rather, it samples (A/D conversion) the received signal and directly transmits the sampled signal to the MT 103. The MT 103 can then combine the signal from the RS 105 and the BS 101 thereby effectively implementing a receiver with a virtual antenna system comprising the antenna(s) of the MT 103 and the RS 105.

However, a disadvantage of A&F is that it uses substantial resource to communicate the sampled data from the RS 105 to the MT 103 and thereby reduces the capacity. For example, in a Time Division Duplex (TDD) system, the communication from the BS 101 to the RS 105 and the MT 101 is performed in one time slot with a second time slot being used for the communication of the samples from the RS 105 to the MT 103. Thus the relaying of the signal takes up an entire second time slot. This substantially reduces the capacity of the system and specifically can result in only half of the cooperative capacity being achieved.

In order to address this disadvantage, a relay scheme known as compress-and-forward has been proposed. This approach includes a compression of the samples in the RS 105 prior to the transmission to the MT 103. The compression is performed using a very complex and specialised quantization technique called Wyner-Ziv source coding with side-information. Further description of the Wyner-Ziv source coding can be found in A.D. Wyner "The rate-distortion function for source coding with side information at the decoder -II: General Sources" Information and Control, Vol 38, pp 60-80, 1978.

In compress-and-forward techniques, the MT 103 exploits the correlation between the signal received from the BS 101 and the compressed samples received from the RS 105 to reconstruct the relay signal. Accordingly, the Wyner-Ziv coding uses the correlation to generate the compressed samples and the system therefore requires that the RS 105 has channel state information for the BS 101 to MT 103 link, which is often an impractical requirement. Furthermore, the approach is very complex and requires substantial computational resource.

A Compress-and-Forward technique on the uplink is disclosed in WO-A-01/11797.

Hence, an improved relay system would be advantageous and in particular a system allowing increased flexibility, reduced complexity, facilitated implementation, increased capacity and/or improved performance would be advantageous.

**Summary of the Invention**

Accordingly, the Invention seeks to preferably mitigate, alleviate or eliminate one or more of the above mentioned disadvantages singly or in any combination.

According to a first aspect of the invention there is provided a communication system comprising: a first communication unit comprising: a receive front end for generating first receive signal samples by receiving a first signal transmitted from a source communication unit, the first receive signal samples corresponding to down-converted time domain signal samples of signals received by at least one antenna of the first communication unit, means for generating a noise indication for the first receive signal samples, determining means for determining quantisation levels for the first receive signal samples such that a noise contribution resulting from quantising the first receive signal samples using the quantisation levels relative to the noise indication meets a criterion, means for generating quantised signal samples by quantising the first receive signal samples using the determined quantisation levels, and transmitting means for transmitting the quantised signal samples to a second communication unit; and the second communication unit comprising: means for receiving the quantised signal samples from the first communication unit, means for generating second receive signal samples by receiving the first signal transmitted from the source communication unit, and receive means for performing a Multiple In Multiple Out, MIMO, reception of the first signal in response to the second receive signal samples and the quantised signal samples.

The invention may allow an improved relay communication system. In particular, a reduced complexity and/or facilitated implementation can be achieved. The invention may allow increased capacity of the communication system and/or an improved performance while maintaining low complexity. Specifically, the invention may in many scenarios allow low complexity and efficient implementations with performance resembling that which can be obtained by non-relay based MIMO systems.

Specifically, in comparison to decode & forward and amplify & forward techniques, the invention may e.g. allow improved communication and/or capacity increase. In comparison to compress and forward techniques, the invention may e.g. allow reduced complexity.

The first receive signal samples can specifically be samples generated by analog to digital conversion of a received antenna signal following receive front end filtering, amplification and down-conversion operations. The first receive signal samples may specifically correspond to the samples of the analog to digital conversion without any digital signal processing being performed. The noise indication and/or the noise contribution may be determined as signal to noise ratio values.

According to an optional feature of the invention, the criterion comprises a requirement that the noise indication exceeds the noise contribution by a first margin.

This may allow efficient performance while maintaining low complexity. The noise component and/or the noise contribution may be determined, evaluated and/or compared on e.g. a linear or logarithmic scale. For example, the criterion may comprise a requirement that the noise indication exceeds the noise contribution by a given dB margin. The noise indication may correspond to the noise energy of the first receive signal samples.

According to an optional feature of the invention, the communication system comprises means for determining the first margin in response to a capacity measure for the communication between the source communication unit and the second communication unit.

This may allow improved performance and may in many scenarios result in a substantial increase of the achievable capacity. The means for determining the first margin may for example receive channel state information for the link from the source communication unit to the first communication unit, the link from the first communication unit to the second communication unit and/or the link from the source communication unit to the second communication unit and may determine the capacity measure for different values of the first margin based on the channel state information (s). It may then select the value of the first margin which results in the highest capacity. The means for determining the first margin may for example be comprised in the first communication unit or may partly or fully be located elsewhere in the system.

According to an optional feature of the invention, the apparatus comprises means for determining the first margin in response to a capacity measure for a communication link between the first communication unit and the second communication unit.

This may allow improved performance and may in many scenarios result in a substantial increase of the capacity. The means for determining the first margin may for example determine the first margin such that the amount of data being communicated depends on the freely available resource. The means for determining the first margin may for example be comprised in the first communication unit or may partly or fully be located elsewhere in the system.

According to an optional feature of the invention, the noise contribution comprises a contribution from quantisation noise and a contribution from clipping noise.

This may allow improved performance and/or may provide additional flexibility in selecting optimal quantisation levels.

According to an optional feature of the invention, the first communication unit is arranged to generate a plurality of sets of quantised signal samples, each set corresponding to time domain receive signal samples for the first signal received by a different antenna of a plurality of antennas of the first communication unit; and wherein the transmitting means is arranged to transmit the plurality of sets of quantised receive samples to the second communication unit.

The receive means for performing the MIMO, reception may include all sets of quantised signal samples in the MIMO reception. The feature may allow improved performance and may specifically provide performance corresponding to MIMO systems with an increasing number of antennas.

According to another aspect of the invention, there is provided a relay communication unit comprising: a receive front end for generating first receive signal samples by receiving a first signal transmitted from a source communication unit, the first receive signal samples corresponding to a down-converted time domain signal samples of signals received from at least one antenna; means for generating a noise indication for the first receive signal samples; determining means for determining quantisation levels for the first receive signal samples such that a noise contribution resulting from quantising the first receive signal samples using the quantisation levels relative to the noise indication meets a criterion; means for generating quantised signal samples by quantising the first receive signal samples using the determined quantisation levels; and transmitting means for transmitting the quantised signal samples to a second communication unit.

According to another aspect of the invention, there is provided a method of communication for a communication system, the method comprising: a first communication unit performing the steps of: a receive front end generating first receive signal samples by receiving a first signal transmitted from a source communication unit, the first receive signal samples corresponding to down-converted time domain signal samples of a signal received from at least one antenna, generating a noise indication for the first receive signal samples, determining quantisation levels for the first receive signal samples such that a noise contribution resulting from quantising the first receive signal samples using the quantisation levels relative to the noise indication meets a criterion, generating quantised signal samples by quantising the first receive signal samples using the determined quantisation levels, and transmitting the quantised signal samples to a second communication unit; and the second communication unit performing the steps of: receiving the quantised signal samples from the first communication unit, generating second receive signal samples by receiving the first signal transmitted from the source communication unit, and performing a Multiple In Multiple Out, MIMO, reception of the first signal in response to the second receive signal samples and the quantised signal samples.

These and other aspects, features and advantages of the invention will be apparent from and elucidated with reference to the embodiment(s) described hereinafter.

## Brief Description of the Drawings

Embodiments of the invention will be described, by way of example only, with reference to the drawings, in which

FIG. 1 is an illustration of a wireless communication system;

FIG. 2 is an illustration of a communication unit in accordance with some embodiments of the invention;

FIG. 3 is an illustration of a communication unit in accordance with some embodiments of the invention; and

FIG. 4 is an illustration of a method of communication in accordance with some embodiments of the invention.

## Detailed Description of Some Embodiments of the Invention

The following description focuses on embodiments of the invention applicable to a cellular communication system comprising base stations serving remote communication units in different cells. The cellular communication system may for example be a wide range Wireless Local Area Network, such as an IEEE 802.16e network. However, it will be appreciated that the invention is not limited to this application but may be applied to many other communication systems allowing relaying of signals between communication units.

The described embodiments may be implemented in a system such as that illustrated in FIG. 1 and will be described with reference thereto. In the specific example, the BS 101 is an IEEE 802.16e compatible base station and the MT 103 is an IEEE 802.16e compatible remote station. Similarly, the RS 105 may be a IEEE 802.16e capable communication unit which can receive the IEEE 802.16e communications from the BS 101. The RS 105 can for example be a WLAN Access Point, a Personal Digital Assistant, a mobile phone or another device comprising suitable communication and processing functionality. In the example, the BS 101 supports communication units in a relatively large cell as the IEEE 802.16e standard is a wide-range technology with typical cell sizes around 7-10 km although ranges up to around 50 km are possible.

Thus, the illustrated system is a TDD Orthogonal Frequency Division Multiplex (OFDM) system, but it will be appreciated that the described principles and approaches are also applicable to other modulation techniques and multiplexing techniques such as e.g. Frequency Division Duplex (FDD).

In the system, a relay approach is used to provide improved performance. The approach is based on the assumption that the destination communication units (specifically the MT 103 of FIG. 1) are close to one or more other wireless devices (e.g. the RS 105 of FIG. 1) which are equipped with receive functionality allowing them to sample the signal received in a given bandwidth. The samples are then compressed by a low complexity quantisation process. The devices then use a typically short-range high rate connection (e.g. an IEEE 802.11n or Ultra WideBand communication link) to forward the compressed samples to the destination communication unit. The destination communication unit then combines the samples from the relaying device(s) with locally generated receive samples by a Mulitple In Multiple Out (MIMO) process.

In order to reduce the communication resource requirements, the relaying devices compress the samples before these are forwarded to the destination. Specifically, the relaying devices quantize received time-domain complex base band samples using a low complexity approach. Furthermore, the quantization is performed in response to a comparison of the noise contribution caused by the quantisation to the noise component of the received signals thereby allowing the quantisation to reduce the samples to the lowest number of bits while ensuring that the impact of the bit rate reduction does not result in unacceptable performance.

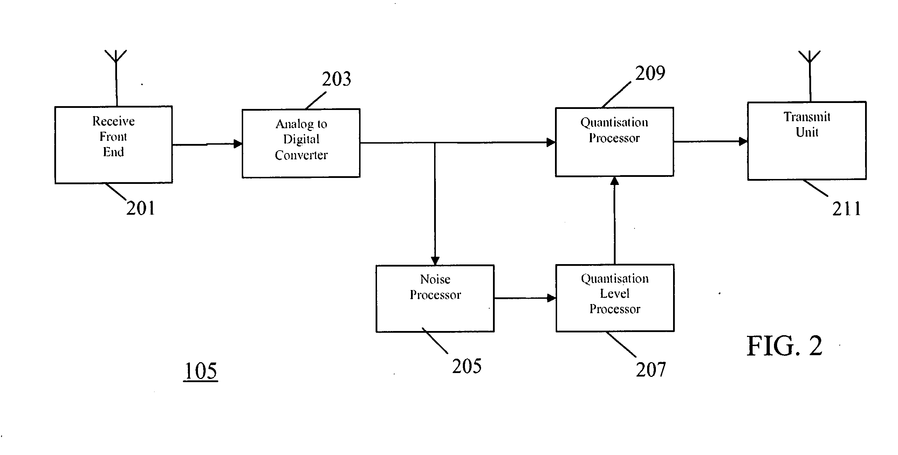

FIG. 2 illustrates the RS 105 in more detail.

The RS 105 comprises an analog receive front end 201 which receives the radio signal from the BS 101 and proceeds to filter, amplify and down-convert the signal as will be known to the person skilled in the art. In the example, the output of the receive front end 201 is an analog complex base band signal.

The receive front end 201 is coupled to an analog to digital converter 203 which samples the analog complex base band signal to generate a stream of receive signal samples. The analogue to digital converter 203 is a high accuracy converter which generates a fixed number of bits per sample. Typical resolutions for the analogue to digital converter 203 are 8, 10 or 12 bits per sample. The sampling rate depends on the bandwidth of the received signal and is typically selected to be more than twice the bandwidth of the signal in order to satisfy the Nyquist criterion.

The sampling performed by the analogue to digital converter 203 is performed in the time domain. Thus, although the communication system of FIG. 1 uses OFDM communication, the sampling is performed directly on the received time domain signal with no conversion to the frequency domain or consideration of individual OFDM carriers or subchannels.

It will be appreciated that for a complex base band signal, the analogue to digital converter 203 may comprise two parallel analog to digital converters or a single analog to digital converter may alternately sample the I and Q channels.

The analogue to digital converter 203 is coupled to a noise processor 205 which is fed the receive signal samples. The noise processor 205 is arranged to generate a noise indication for the received signal which is indicative of the noise energy of the receive signal samples. Specifically, the noise processor 205 can generate a signal to noise ratio for the received signal. As another example, the noise processor 205 can directly generate a noise signal estimate such as a noise energy or power estimate.

Methods and algorithms for determining signal to noise ratios or noise energies from a stream of samples will be well known to the person skilled in the art and any suitable method or algorithm can be used without detracting from the invention. As a specific example in noise-limited case, the noise processor 205 can determine the signal to noise ratio in dB by measuring the Received Signal Strength in dBm of the currently received signal, and subtracting the Noise Level in dBm.

The noise processor 205 is coupled to a quantisation level processor 207 which determines a set of quantisation levels that can be used to quantise the received signal samples prior to transmission of these to the MT 101. In a simple embodiment, the quantisation level processor 207 can simply determine how many bits are to be used for each sample and/or can determine a maximum magnitude for the transmitted samples (i.e. a clipping level). In other embodiments, a set of non-identical and non-linear quantisation levels can be determined. For example, the quantisation level processor can determine how many quantisation levels are used for the samples as well as the boundaries between the intervals.

The quantisation level processor 207 determines the quantisation levels considering the noise contribution which will results from quantising the first receive signal samples. The quantisation levels are specifically selected such that this noise contribution relative to the noise indication for the received signal meets a given criterion.

As a specific example, the quantisation levels can be determined such that the noise energy for the received signal exceeds the noise contribution from the quantisation by a given margin. The noise energy and the noise contribution can be expressed as signal to noise values and thus the quantisation level processor 207 can specifically determine the number of bits $n_{Q,RS}$, to be used for each (real) sample such that the signal to noise ratio for the received signal is below the signal to noise contribution by a given number of dBs. A typical value may for example be 5 dB.

In the example, the quantisation level processor 207 determines the noise contribution as the combined contribution from the quantisation noise caused by quantising the received signal samples into coarser quantisation levels and the clipping noise caused by the distortion due to a (potentially) limited dynamic range following the quantisation. However, it will be appreciated that in some embodiments the quantisation level processor 207 may determine the noise contribution based on only one of these measures. For example, if the same dynamic range is used for the quantised samples, a clipping noise may be considered to be insignificant.

The quantisation level processor 207 is coupled to a quantisation processor 209 which is further coupled to the analogue to digital converter 203. The quantisation processor 209 receives the receive signal samples from the analogue to digital converter 203 and proceeds to compress the samples by quantising these using the quantisation levels determined by the quantisation level processor 207.

As a simple example, the quantisation level processor 207 can determine that no additional clipping should be introduced and that three bits are sufficient to represent the received signal. Accordingly, the quantisation processor 209 may simply select the three most significant bits of the received signal samples.

Thus, by ensuring that the noise contribution from the quantisation is substantially lower than the noise of the received signal, the compression of the received signal samples using the determined quantisation levels can be ensured to not significantly degrade the performance of the communication. Thus, an improved performance can be achieved with a reduced communication resource requirement.

The quantisation processor 209 is coupled to a transmit unit 211 which is fed the quantised signal samples from the quantisation processor 209. The transmit unit 211 generates a data packet which comprises the quantised signal samples and transmits this data packet to the MT 103.

In the example, the transmit unit 211 is arranged to communicate the data packet to the MT 103 using a different communication standard then that used for communications from the BS 101. Specifically, the transmit unit 211 is arranged to communicate using a communication technology having a shorter range than that of the BS 101.

In this specific example, the transmit unit 211 is arranged to communicate with the MT 103 using an IEEE, 802.11 (e.g. IEEE 802.11a, b or n) communication standard or an Ultra WideBand, UWB, communication standard. Thus, the system provides an approach which can take advantage of the individual benefits and characteristics of different communication standards, and which in particular allows the use of short range communication links to improve the performance of wide range communication systems.

In addition to the quantised samples, the transmit unit 111 furthermore includes various information in the data packet. In particular, the transmit unit 211 can include an indication of the number of bits per quantised sample and the number of transmitted quantised samples in order to allow the MT 103 to extract the samples from the data packet. Furthermore, for more complex quantisations, such as a non-homogenous or non-linear quantisation, the data packet may include information of e.g. the actual quantisation levels used, the clipping level used etc.

In some embodiments, the transmit unit 211 furthermore provides an indication of the signal to noise ratio of the received signal. This value may be used by the MT 103 when combining the signals received from the RS 105 and the signals received directly at the MT 103 from the BS 101. For example, the quantised signal samples from the RS 105 may be weighted in response to the signal to noise ratio before being combined at the MT 103.

In some embodiments, the transmit unit 211 is also arranged to select a transmission format in response to the link quality of the communication link between the RS 105 and the MT 103. For example, for a low link quality a strong error correcting code may be used, and for a high link quality a weak error correcting code may be used.

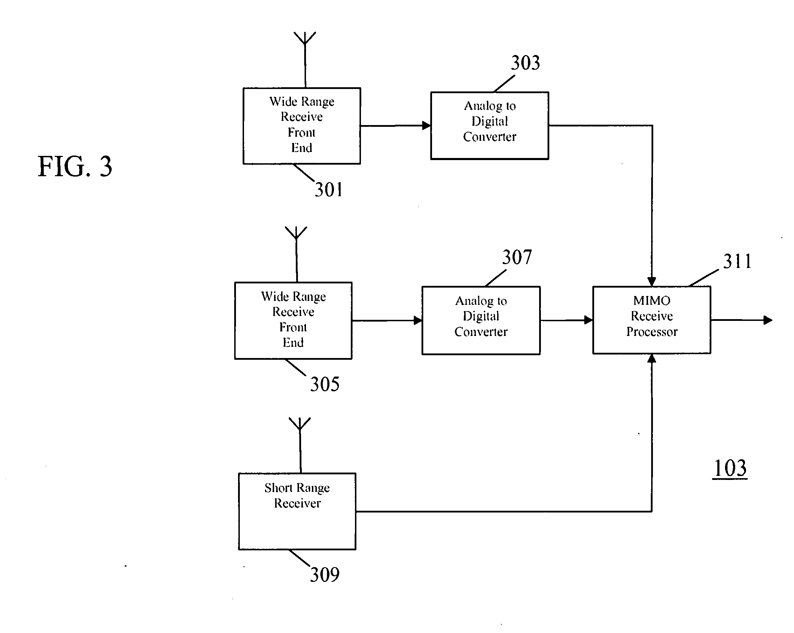

FIG. 3 illustrates the MT 103 in more detail.

The MT 103 comprises a wide range receive front end 301 which receives the radio signal from the BS 101 and proceeds to filter, amplify and down-convert the signal as will be known to the person skilled in the art. In the example, the output of the wide range receive front end 301 is an analog complex base band signal.

The wide range receive front end 301 is coupled to an analog to digital converter 303 which samples the analog complex base band signal to generate a stream of receive signal samples. The analogue to digital converter 303 is a high accuracy converter which generates a fixed number of bits per sample. Typical resolutions for the analogue to digital converter 303 are 8, 10 or 12 bits per sample. The sampling rate depends on the bandwidth of the received signal and is typically selected to be more than twice the bandwidth of the signal in order to satisfy the Nyquist criterion.

It will be appreciated that for a complex base band signal, the analogue to digital converter 303 may comprise two parallel analog to digital converters or a single analog to digital converter may alternately sample the I and Q channels.

Thus, the MT 103 and RS 105 comprise similar (or functionally substantially identical) receive front ends which generate time domain complex base band samples.

Furthermore, in the example, the MT comprises a second antenna with an associated wide range receive front end 305 and analog to digital converter 307 generating a second stream of time domain complex base band samples.

The MT 103 furthermore comprises a short range receiver 309 which can receive the data packet from the RS 105 over the short range communication link. The short range receiver 309 can specifically be an IEEE 802.11 or UWB receiver. The short range receiver 309 furthermore parses the received data packet using the information from the RS 105 and extracts the quantised signal samples from the data packet. Thus, the output of the short range receiver 305 is the quantised signal samples corresponding to the time domain complex base band signal samples received by the RS 105.

The short range receiver 309 and the two analogue to digital converters 303, 305 are furthermore coupled to a MIMO receive processor 307 which performs a Multiple In Multiple Out, MIMO, reception of the signal transmitted from the BS 101 using the quantised signal samples from the RS 105 and the two sets of signal samples generated by the MT 103 itself. Furthermore, in some embodiments, the MT 103 may be arranged to receive signal samples from a plurality of different relays and the MIMO receive processor 307 may be arranged to include received signal samples from more or all of these in the MIMO reception.

In a MIMO system communication is based on a plurality of transmit and receive antennas. Specifically, rather than merely providing diversity from spatially separated transmit antennas, MIMO techniques utilise transmitters having at least partially separate transmit circuitry for each antenna thus allowing different sub-signals to be transmitted from each of the antennas. The receivers may receive signals from a plurality of receive antennas and may perform a joint detection taking into account the number and individual characteristics of the plurality of transmit antennas and receive antennas. This may substantially improve the spectral efficiency of the cellular communication system.

In a MIMO system, multiple antennas are provided on the transmit and receive side in order to exploit the variations in the channels between the individual transmit and receive antennas to improve the spectral efficiency. In such systems, different streams of data are simultaneously transmitted on the different transmit antennas but at the same frequency. Thus, the transmitted signals of the different antennas will interfere with each other. In particular, one receive antenna will not just receive one of the signals but will receive all of the parallel signals transmitted by the transmitter. The signal received by receive antenna q may be represented by

$$x_q(t) = \sum_{p=1}^{N} h_{qp}(t) s_p(t)$$

where $h_{qp}(t)$ is the channel transfer function of the communication channel between transmit antenna p and receive antenna q, $s_p(t)$ is the signal transmitted on antenna p and N is the number of transmit antennas.

Thus the total received signal received by the receiver may be represented by

$$X(t) = H(t)S(t)$$

where X(t) denotes the vector having $x_q(t)$ as the q-th element, H(t) denotes the matrix having $h_{qp}(t)$ as the (q,p)-th element and S(t) denotes the vector having $s_p(t)$ as the p-th element.

Thus, the transmitted signal may be estimated from the received signal and the channel estimates of the channels from each of the transmit antennas to each of the receive antennas. For example, MIMO receivers are known which determine the transmitted signals by using a least squares method or a zero forcing technique. In this way the receiver performs a joint detection of the signals transmitted from the plurality of transmit antennas and received on the plurality of receive antennas. Theoretical and practical studies have shown that MIMO techniques may provide substantially improved spectral efficiency and may result in a significantly increased capacity of the communication system.

In the described example, the BS 101 thus comprises a plurality of transmit antennas (four are show in FIG. 1) which may communicate with the MT 103 using MIMO techniques. If no relaying is utilised, the MIMO communication becomes one of four transmit antennas and two receive antennas. However, utilising the RS 105, the MIMO communication effectively becomes one of four transmit antennas and three receive antennas. Furthermore, the antenna of the RS 105 may be located in a more advantageous position thereby providing an even higher performance improvement.

Thus, the described system allows improved performance while reducing the overhead and resource requirement in communicating the samples from the RS 105 to the MT 103. Furthermore, the compression of the samples is performed by a highly efficient but very low complexity approach. In the following, a specific example of how the quantisation level processor 207 may determine the quantisation levels is described. In the example, a uniform quantisation with equal size quantisation intervals is used.

In the example, the number of bits $n_{Q,RS}$ required for quantization at the RS 105 is determined from the expression of the signal to quantization plus clipping noise ratio of an A/D converter with $n_{Q,RS}$ bits.

I should be noted that the quantisation processor 209 quantizes not only the useful signal but also the thermal noise, which can become non-negligible at low signal to noise ratios.

In the following $\sigma_s^2$ denotes the variance of the OFDM signal samples, $\sigma_n^2$ denotes the noise variance. Therefore, the total variance of the receive signal samples is $\sigma^2 = \sigma_s^2 + \sigma_n^2$.

As stated previously, an indication of the signal to noise ratio $10\log_{10}\left(\dfrac{\sigma_s^2}{\sigma_n^2}\right)$ for the samples may be included in the data packet transmitted to the MT 103.

Assuming that both the OFDM signal and the thermal noise are Gaussian distributed with the variances $\sigma_s^2$ and $\sigma_n^2$ respectively, rate-distortion theory states that ( ref. e.g. T. Cover, J.A. Thomas "Elements of Information Theory" Wiley-Interscience, 1991):

$$n_{Q,RS} = \frac{1}{2}\log_2 \frac{\sigma^2}{D}$$

where D is the quantization plus clipping noise variance, i.e. D corresponds to the noise contribution caused by the quantisation.

Moreover, in the example, the quantisation level processor 207 uses the simple constraint that the signal to noise ratio for the quantisation noise contribution should be m dB higher than the signal to noise ratio of the received signal, i.e.:

$$10\log_{10}\left(\frac{\sigma_s^2}{D}\right) = 10\log_{10}\left(\frac{\sigma_s^2}{\sigma_n^2}\right) + m$$

This leads to (while constraining $n_{Q,RS}$ to be an integer):

$$n_{Q,RS} = \left\lceil \frac{\ln(10)}{20\ln(2)}\left(10\log_{10}\left(\frac{\sigma_s^2}{\sigma_n^2}\right) + m\right) + 10\log_{10}\left(1 + \frac{\sigma_n^2}{\sigma_s^2}\right)\right\rceil$$

It should be noted that this is optimistic in that it requires an optimum position of the quantization regions.

However, assuming uniform quantisation steps with a dynamic range of [-E;+E] with E=K.σ, where K is the A/D back-off. In this case, the quantization step size is $q = \dfrac{2E}{2^{n_{Q,RS}}}$.

The quantization noise variance can then be expressed as

$$\sigma_q^2 = \frac{q^2}{12}\operatorname{erf}\left(\frac{K}{\sqrt{2}}\right)$$

The clipping noise can be given by:

$$\sigma_c^2 = \sigma^2 \left( \left(1 + K^2\right) \text{erfc}\left(\frac{K}{\sqrt{2}}\right) - \sqrt{\frac{2}{\pi}} K \exp\left(-\frac{K^2}{2}\right) \right)$$

And the total distortion is given by

$$D = \sigma_q^2 + \sigma_c^2$$

The best signal to quantization plus clipping noise value can be obtained by maximizing the ratio $\dfrac{\sigma^2}{D}$ w.r.t. the A/D back-off K.

The following table indicates the signal plus thermal noise to quantization plus clipping noise ratio achievable for a given number of bits.

| $n_{Q,\,RS}$ | 1 | 2 | 3 | 4 | 5 | 6 | 7 |
|---|---|---|---|---|---|---|---|
| $\left(\dfrac{\sigma^2}{D}\right)_{IDEAL}$ **(dB)** | 8.6 | 17.3 | 26.0 | 34.7 | 43.4 | 52.1 | 60.8 |
| $\left(\dfrac{\sigma^2}{D}\right)_{CONST}$ **(dB)** | 7.2 | 10.8 | 15.1 | 19.8 | 24.7 | 29.9 | 35.2 |

Thus for signal to noise ratios of the received signal of around, say , 15 - 20 dB, the number of bits can be reduced to 4 to 6 bits without significantly degrading the performance.

It will be appreciated that the margin imposed between the receive signal noise and the quantisation noise contribution is a trade off between conflicting requirements.

Specifically, the higher the margin, the less degradation is caused by the compression/quantisation. However, the lower the margin the lower the lower the number of bits, and accordingly the lower the resource requirement for the communication between the RS 105 and the MT 103.

Accordingly, in some embodiments, the communication system may comprise functionality for dynamically modifying the margin used depending on the current conditions.

For example, in some embodiments, the margin is determined in response to a capacity measure for a communication link between the first communication unit and the second communication unit.

The capacity measure may for example be a measure of the currently available capacity for communication over the short range air interface and/or a load indication for the air interface used for this communication.

As a simple example, the margin may be increased for low load indications as this may indicate more resource being available and thus more capacity for communicating a larger number of bits. However, for high load indications, a low margin may be used resulting in fewer data bits to communicate but a higher degradation caused by the data compression.

In some embodiments, the margin is determined in response to a capacity measure for the combined communication between the BS 101 and the MT 103.

The capacity measure for the communication between the BS 101 and the MT 103 is specifically a combination capacity which takes into account both the direct communication from the BS 101 to the MT 103 as well as the communication from the BS 101 to the RS 105 and from the RS 105 to the MT 103.

In particular, an overall resource usage for the communication from the BS 101 to the MT 103 can be determined as a function of the margin. This resource usage will include the contribution from the communication from the BS 101 to the MT 103 as well as from the RS 105 to the MT 103. For example, increasing the signal to noise ratio margin will result in a potentially lower resource usage for the communication from the BS 101 (as less power is required due to the improved contribution from the relay link) but a higher resource usage of the communication from the RS 105 to the MT 103. Thus, depending on the exact channel conditions, different margin values may be optimal and the system may comprise functionality for calculating the combined resource usage for different margins taking into account the current channel conditions. The margin value providing the lowest overall resource usage can then be used.

It will be appreciated that the determination of the margin may be determined in any suitable location including in the BS 101, the MT 103 and/or the RS 105. For example, the MT 103 may determine channel condition information from the received signal and communicate these to the BS 101 which may proceed to determine the margin value. This value can then be communicated to the RS 105 which can proceed to apply the determined value.

In the above described example, the RS 105 contained only one antenna thereby providing for an increase of the MIMO communication from a 4x2 to a 4x3 communication. However, it will be appreciated that in other embodiments, the RS 105 may comprise a plurality of antennas and may use the same approach to generate a separate quantised signal sample streams for each antenna.

In such cases, the samples for the different antennas are transmitted to the MT 103 where they are included in the MIMO reception. Thus, the use of a plurality of antennas at the RS 105 can improve the communication further. For example, for two antennas at the RS 105 the communication may effectively resemble a typical 4x4 MIMO communication.

In such embodiments, the data packet can include an indication of the number of antennas at the RS 105 allowing the MT 103 to extract the received data and to modify the MIMO reception to match the number of antennas.

Due to different channel conditions, the signal to noise ratios for the different antennas may vary, although the quantized signal itself may have the same variance if automatic gain control is performed individually for each antenna. Accordingly, the data packet may include a signal to noise ratio indication for each individual antenna. Similarly, the quantisation levels may be determined individually for each antenna such that the quantised signal samples for different antennas may be differently quantised/compressed.

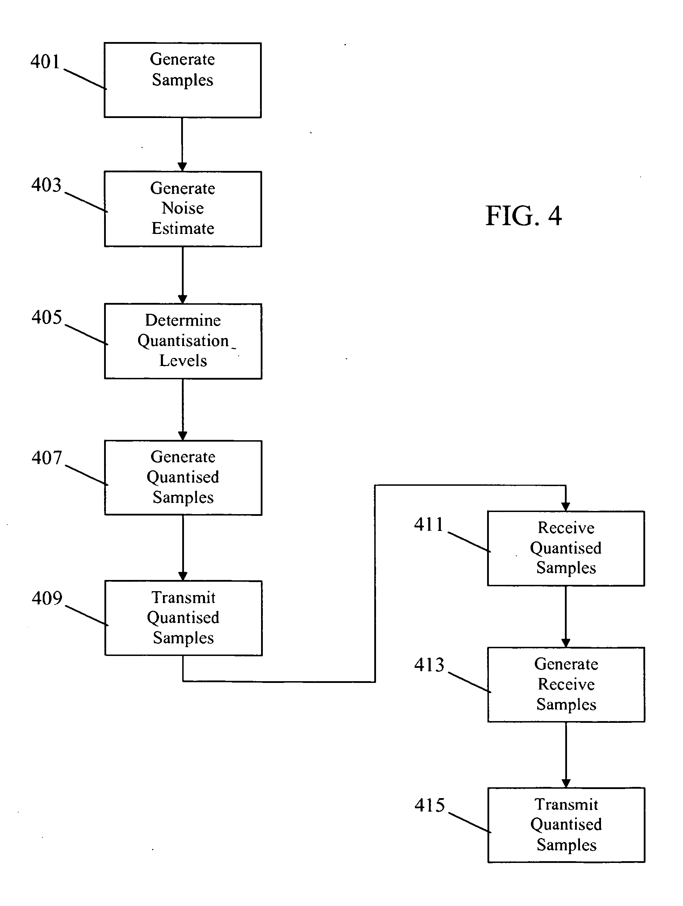

FIG. 4 illustrates an example of a method of communication for a communication system. The method may apply to the systems described above.

The method initiates in step 401 wherein a receive front end of a first communication unit generates first receive signal samples by receiving a first signal transmitted from a source communication unit. The first receive signal samples correspond to down-converted time domain signal samples of signals received from at least one antenna,

Step 401 is followed by step 403 wherein a noise indication is generated for the first receive signal samples.

Step 403 is followed by step 405 wherein quantisation levels for the first receive signal samples are determined such that a noise contribution resulting from quantising the first receive signal samples using the quantisation levels relative to the noise indication meets a criterion.

Step 405 is followed by step 407 wherein quantised signal samples are generated by quantising the first receive signal samples using the determined quantisation levels.

Step 407 is followed by step 409 wherein the quantised signal samples are transmitted from the first communication unit to a second communication unit.

Step 409 is followed by step 411 wherein the second communication unit receives the quantised signal samples from the first communication unit.

Step 411 is followed by step 413 wherein second receive signal samples are generated by receiving the first signal transmitted from the source communication unit.

Step 413 is followed by step 415 wherein a Multiple In Multiple Out, MIMO, reception of the first signal is performed in response to the second receive signal samples and the quantised signal samples.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

**Claims**

1. A communication system comprising:

   a first communication unit comprising:

   a receive front end (201, 203) for generating first receive signal samples by receiving a first signal transmitted from a source communication unit (101), the first receive signal samples corresponding to down-converted time domain signal samples of a signal received by at least one antenna of the first communication unit, means (205) for generating a noise indication for the first receive signal samples, determining means (207) for determining quantisation levels for the first receive signal samples such that a noise contribution resulting from quantising the first receive signal samples using the quantisation levels relative to the noise indication meets a criterion, means (209) for generating quantised signal samples by quantising the first receive signal samples using the determined quantisation levels, and transmitting means for transmitting the quantised signal samples to a second communication unit; and

   the second communication unit comprising:

   means (309) for receiving the quantised signal samples from the first communication unit, means (301, 303, 305, 307) for generating second receive signal samples by receiving the first signal transmitted from the source communication unit (101), and receive means (311) for performing a Multiple In Multiple Out, MIMO, reception of the first signal in response to the second receive signal samples and the quantised signal samples.

2. The communication system of claim 1 wherein the criterion comprises a requirement that the noise indication exceeds the noise contribution by a first margin.

3. The communication system of claim 2 wherein the communication system comprises means for determining the first margin in response to a capacity measure for the communication between the source communication unit and the second communication unit.

4. The communication system of claim 2 or 3 wherein the apparatus comprises means for determining the first margin in response to a capacity measure for a communication link between the first communication unit and the second communication unit.

5. The communication system of any previous claim wherein the noise contribution comprises a contribution from quantisation noise and a contribution from clipping noise.

6. The communication system of any previous claim wherein the first receive signal samples are complex base band samples.

7. The communication system of any previous claim wherein the transmitting means (211) is further arranged to transmit an indication of a number of bits per quantised sample.

8. The communication system of any previous claim wherein the transmitting means (211) is further arranged to transmit an indication of a number of transmitted quantised samples.

9. A relay communication unit comprising:

a receive front end (201, 203) for generating first receive signal samples by receiving a first signal transmitted from a source communication unit (101), the first receive signal samples corresponding to a down-converted time domain signal samples of a signal received from at least one antenna;
means (205) for generating a noise indication for the first receive signal samples;
determining means (207) for determining quantisation levels for the first receive signal samples such that a noise contribution resulting from quantising the first receive signal samples using the quantisation levels relative to the noise indication meets a criterion;
means (209) for generating quantised signal samples by quantising the first receive signal samples using the determined quantisation levels; and
transmitting means (211) for transmitting the quantised signal samples to a second communication unit.

**Patentansprüche**

1. Kommunikationssystem, welches Folgendes aufweist:

eine erste Kommunikationseinheit, welche Folgendes aufweist:

ein Empfangs-Front-End (201, 203) zur Erzeugung erster Empfangssignalproben durch Empfang eines ersten Signals, welches von einer Ursprungs-Kommunikationseinheit (101) übertragen wird, wobei die ersten Empfangssignalproben abwärts gewandelten Zeitbereichs-Signalproben eines Signals entsprechen, welches von mindestens einer Antenne der ersten Kommunikationseinheit empfangen wird;
eine Vorrichtung (205) zur Erzeugung einer Rauschanzeige für die ersten Empfangssignalproben;
eine Bestimmungsvorrichtung (207) zur Bestimmung von Quantisierungspegeln für die ersten Empfangssignalproben, so dass ein Rauschbeitrag, welcher aus der Quantisierung der ersten Empfangssignalproben unter Verwendung der Quantisierungspegel bezüglich der Rauschanzeige resultiert, ein Kriterium erfüllt;
eine Vorrichtung (209) zur Erzeugung von quantisierten Signalproben durch Quantisierung der ersten Empfangssignalproben unter Verwendung der bestimmten Quantisierungspegel; und
eine Übertragungsvorrichtung zur Übertragung der quantisierten Signalproben an eine zweite Kommunikationseinheit; und
wobei die zweite Kommunikationseinheit Folgendes aufweist:

eine Vorrichtung (309) für den Empfang der quantisierten Signalproben von der ersten Kommunikationseinheit;
eine Vorrichtung (301, 303, 305, 307) zur Erzeugung von zweiten Empfangssignalproben durch Empfang des ersten Signals, welches von der Ursprungs-Kommunikationseinheit (101) übertragen wird; und
eine Empfangsvorrichtung (311) zur Ausführung eines MIMO(Multiple In Multiple Out)-Empfangs des ersten Signals ansprechend auf die zweiten Empfangssignalproben und die quantisierten Signalproben.

2. Kommunikationssystem nach Anspruch 1, **dadurch gekennzeichnet, dass** das Kriterium eine Anforderung aufweist, dass die Rauschanzeige den Rauschbeitrag um eine erste Toleranz überschreitet.

3. Kommunikationssystem nach Anspruch 2, **dadurch gekennzeichnet, dass** das Kommunikationssystem eine Vorrichtung zur Bestimmung der ersten Toleranz ansprechend auf einen Kapazitäts- bzw. Leistungs-Größenwert für die Kommunikation zwischen der Ursprungs-Kommunikationseinheit und der zweiten Kommunikationseinheit aufweist.

4. Kommunikationssystem nach Anspruch 2 oder 3, **dadurch gekennzeichnet, dass** das System eine Vorrichtung zur Bestimmung der ersten Toleranz ansprechend auf einen Kapazitäts- bzw. Leistungs-Größenwert für eine Kommunikations- bzw. Nachrichtenverbindung zwischen der ersten Kommunikationseinheit und der zweiten Kommunikationseinheit aufweist.

5. Kommunikationssystem nach einem der vorhergehenden Ansprüche, **dadurch gekennzeichnet, dass** der Rauschbeitrag einen Beitrag aus einem Quantisierungsrauschen und einen Beitrag aus einem Rauschen aufgrund von Clipping aufweist.

**6.** Kommunikationssystem nach einem der vorhergehenden Ansprüche, **dadurch gekennzeichnet, dass** die ersten Empfangssignalproben komplexe Basisbandproben sind.

**7.** Kommunikationssystem nach einem der vorhergehenden Ansprüche, **dadurch gekennzeichnet, dass** die Übertragungsvorrichtung (211) des Weiteren derart angeordnet ist, dass sie eine Angabe einer Anzahl von Bits pro quantisierter Probe überträgt.

**8.** Kommunikationssystem nach einem der vorhergehenden Ansprüche, **dadurch gekennzeichnet, dass** die Übertragungsvorrichtung (211) des Weiteren derart angeordnet ist, dass sie eine Angabe einer Anzahl übertragener bzw. gesendeter quantisierter Proben überträgt.

**9.** Weiterleitungs-Kommunikationseinheit, welche Folgendes aufweist:

ein Empfangs-Front-End (201, 203) zur Erzeugung erster Empfangssignalproben durch Empfang eines ersten Signals, welches von einer Ursprungs-Kommunikationseinheit (101) übertragen wird, wobei die ersten Empfangssignalproben abwärts gewandelten Zeitbereichs-Signalproben eines Signals entsprechen, welches von mindestens einer Antenne empfangen wird;
eine Vorrichtung (205) zur Erzeugung einer Rauschanzeige für die ersten Empfangssignalproben;
eine Bestimmungsvorrichtung (207) zur Bestimmung von Quantisierungspegeln für die ersten Empfangssignalproben, so dass ein Rauschbeitrag, welcher aus der Quantisierung der ersten Empfangssignalproben unter Verwendung der Quantisierungspegel bezüglich der Rauschanzeige resultiert, ein Kriterium erfüllt;
eine Vorrichtung (209) zur Erzeugung von quantisierten Signalproben durch Quantisierung der ersten Empfangssignalproben unter Verwendung der bestimmten Quantisierungspegel; und
eine Übertragungsvorrichtung (211) zur Übertragung der quantisierten Signalproben an eine zweite Kommunikationseinheit.

**Revendications**

**1.** Système de communication comprenant:

une première unité de communication comprenant:

un frontal de réception (201, 203) pour générer des premiers échantillons de signal de réception en recevant un premier signal transmis par une unité de communication de source (101), les premiers échantillons de signal de réception correspondant à des échantillons de signal de domaine temporel convertis-abaissés d'un signal reçu par au moins une antenne de la première unité de communication,
des moyens (205) pour générer une indication de bruit pour les premiers échantillons de signal de réception,
des moyens de détermination (207) pour déterminer des niveaux de quantification pour les premiers échantillons de signal de réception de sorte qu'une contribution de bruit résultant de la quantification des premiers échantillons de signal de réception en utilisant les niveaux de quantification relatifs à l'indication de bruit satisfasse à un critère,
des moyens (209) pour générer des échantillons de signal quantifiés en quantifiant les premiers échantillons de signal de réception en utilisant les niveaux de quantification déterminés, et
des moyens de transmission pour transmettre les échantillons de signal quantifiés à une deuxième unité de communication; et
la deuxième unité de communication comprenant:

des moyens (309) pour recevoir les échantillons de signal quantifiés de la première unité de communication,
des moyens (301, 303, 305, 307) pour générer des deuxièmes échantillons de signal de réception en recevant le premier signal transmis par l'unité de communication de source (101), et
des moyens de réception (311) pour effectuer une réception MIMO, Multiple In Multiple Out, du premier signal en réponse aux deuxièmes échantillons de signal de réception et aux échantillons de signal quantifiés.

2. Système de communication selon la revendication 1, dans lequel le critère comprend une spécification que l'indication de bruit dépasse la contribution de bruit d'une première marge.

3. Système de communication selon la revendication 2, dans lequel le système de communication comprend des moyens pour déterminer la première marge en réponse à une mesure de capacité pour la communication entre l'unité de communication de source et la deuxième unité de communication.

4. Système de communication selon la revendication 2 ou 3, dans lequel le dispositif comprend des moyens pour déterminer la première marge en réponse à une mesure de capacité pour une liaison de communication entre la première unité de communication et la deuxième unité de communication.

5. Système de communication selon l'une quelconque des revendications précédentes, dans lequel la contribution de bruit comprend une contribution de bruit de quantification et une contribution de bruit d'écrêtage.

6. Système de communication selon l'une quelconque des revendications précédentes, dans lequel les premiers échantillons de signal de réception sont des échantillons de bande de base complexes.

7. Système de communication selon l'une quelconque des revendications précédentes, dans lequel les moyens de transmission (211) sont en outre agencés pour transmettre une indication d'un nombre de bits par échantillon quantifié.

8. Système de communication selon l'une quelconque des revendications précédentes, dans lequel les moyens de transmission (211) sont en outre agencés pour transmettre une indication d'un nombre d'échantillons quantifiés transmis.

9. Unité de communication relais comprenant:

un frontal de réception (201, 203) pour générer des premiers échantillons de signal de réception en recevant un premier signal transmis par une unité de communication de source (101), les premiers échantillons de signal de réception correspondant à des échantillons de signal de domaine temporel convertis-abaissés d'un signal reçu d'au moins une antenne;
des moyens (205) pour générer une indication de bruit pour les premiers échantillons de signal de réception;
des moyens de détermination (207) pour déterminer des niveaux de quantification pour les premiers échantillons de signal de réception de sorte qu'une contribution de bruit résultant de la quantification des premiers échantillons de signal de réception en utilisant les niveaux de quantification relatifs à l'indication de bruit satisfasse à un critère;
des moyens (209) pour générer des échantillons de signal quantifiés en quantifiant les premiers échantillons de signal de réception en utilisant les niveaux de quantification déterminés; et
des moyens de transmission (211) pour transmettre les échantillons de signal quantifiés à une deuxième unité de communication.

EP 2 039 023 B1

FIG. 1

FIG. 2

FIG. 3

401 — Generate Samples

403 — Generate Noise Estimate

FIG. 4

405 — Determine Quantisation Levels

407 — Generate Quantised Samples

409 — Transmit Quantised Samples

411 — Receive Quantised Samples

413 — Generate Receive Samples

415 — Transmit Quantised Samples

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0111797 A

**Non-patent literature cited in the description**

- **G. Kramer ; M. Gastpar ; P. Gupta.** Cooperative Strategies and Capacity Theorems for Relay Networks. *IEEE Transactions on Information Theory,* September 2005, vol. 51 (9

- **A.D. Wyner.** The rate-distortion function for source coding with side information at the decoder -II: General Sources. *Information and Control,* 1978, vol. 38, 60-80
- **T. Cover ; J.A. Thomas.** Elements of Information Theory. Wiley-Interscience, 1991